# EUROPÄISCHE PATENTSCHRIFT

(11) **EP 2 189 815 B1**
(45) Veröffentlichungstag und Bekanntmachung des Hinweises auf die Patenterteilung: **23.11.2011**
(21) Anmeldenummer: 09171195.2
(22) Anmeldetag: 24.09.2009
(51) Int. Cl.: G01S 17/93, G01S 7/497, G01S 7/481

(54) **Optische Einrichtung und Verfahren zu deren Überprüfung**
Optical device and method for testing same
Dispositif optique et procédé destiné à sa surveillance

(30) Priorität: 17.07.2009 DE 102009027797; 19.11.2008 DE 102008043875
(43) Veröffentlichungstag der Anmeldung: 26.05.2010
(73) Patentinhaber: Robert Bosch GmbH, 70442 Stuttgart (DE)
(72) Erfinder: Fiess, Reinhold, 77770 Durbach (DE); Steinkogler, Sascha, 79106 Freiburg (DE); Kallmann, Ulrich, 72076 Tuebingen (DE)

(56) Entgegenhaltungen:
- EP-A2- 1 792 775
- DE-A1- 19 704 793
- DE-A1- 19 908 214
- DE-C1- 4 305 195
- JP-A- 9 211 108
- US-A1- 2006 221 228

## Beschreibung

### Stand der Technik

Die Erfindung betrifft eine optische Einrichtung nach dem Oberbegriff des Anspruchs 1. Weiterhin betrifft die Erfindung ein Verfahren zum Überprüfen einer optischen Einrichtung nach dem Oberbegriff des Anspruchs 14. Immer häufiger werden in Fahrerassistenzsystemen von Fahrzeugen optische Einrichtungen mit einem so genannten Laser-Imager eingesetzt, um das Fahrzeugumfeld zu erfassen. Das Fahrzeugumfeld wird dabei durch den Laser-Imager vorzugsweise mit dem so genannten Flying-Spot-Verfahren abgetastet. Dabei wird mit mindestens einem, beispielsweise rasterförmig abgelenkten Laserstrahl, die Umgebung im Wesentlichen punktförmig bestrahlt. Aus der von Objekten reflektierten und/oder gestreuten Laserstrahlung wird ein Abbild der Umgebung ermittelt. Zusätzlich kann mittels gepulster Laserstrahlung in Verbindung mit einer Laufzeitmessung auch die Entfernung von Objekten ermittelt werden. Insgesamt ist auf diese Weise eine dreidimensionale Erfassung des Fahrzeugumfelds möglich. Üblicherweise wird der Laserstrahl unter Verwendung mindestens eines horizontal und vertikal schwingenden mikromechanischen Spiegels (MEMS-Spiegel) in zwei Dimensionen abgelenkt. Die an Objekten im Fahrzeugumfeld reflektierte und gestreute Strahlung wird beispielsweise über eine Empfängeroptik einem Strahlungsdetektor zugeführt, dessen Ausgangssignal zum Zwecke der Bilderfassung weiterverarbeitet wird. Das Signal am Detektor hängt im einfachsten Fall invers proportional von der Entfernung des detektierten Objekts ab. Eine größere Reichweite kann demzufolge durch eine quadratische Steigerung der Laserpulsleistung des Laser-Imagers erreicht werden. Radiometrische Untersuchungen haben in der Praxis ergeben, dass bei einer Detektionsgrenze des Detektors von etwa 1 µW eine Pulsleistung des Lasers von mindestens einigen W bis etwa 30 W erforderlich ist. Ein Laser-Imager lässt sich in der Praxis im Wesentlichen in den zwei folgenden Anordnungen realisieren. Bei einer uniaxialen Anordnung führt der optische Strahlengang des Sende- und Empfangsstrahls über eine einzige gemeinsame optische Anordnung. Diese Anordnung benötigt einen vergleichsweise geringen Bauraum. Eine verschmutzte Linse kann vergleichsweise leicht erkannt werden. Es tritt kein Parallaxeneffekt auf und es lässt sich ein günstiges Signal-Rausch-Verhältnis erzielen. Allerdings ist eine vergleichsweise aufwändige und daher teure optische Einrichtung erforderlich, die unter anderem einen Strahlteiler umfasst. Es muss weiterhin mit einem hohen Anteil von Streulicht und mit hohen Strahlteilerverlusten gerechnet werden. Bei einer biaxialen Anordnung sind dagegen Sende- und Empfangsweg weitgehend voneinander getrennt. Der optische Aufbau ist vergleichsweise einfach und es treten keine Strahlteilerverluste auf. Als Nachteil ist mit einem Parallaxeneffekt zu rechnen. Zusätzlich treten ein großes Rauschen und eine Abschattung im Nahbereich auf. Auch lässt sich eine Verschmutzung von optischen Komponenten nicht ohne weiteres detektieren.

Die DE 197 04 793 A1 zeigt eine optische Einrichtung mit einer Sendeeinrichtung und einer Empfangseinrichtung mit einer biaxialen Anordnung von optischen Elementen in der Sende- und Empfangsrichtung. Die Senderichtung umfasst eine Laserdiode als Strahlungsquelle und ein optisches Element für die Auskopplung der von der Laserdiode erzeugten Strahlung aus der Sendeeinrichtung. Die Empfangseinrichtung umfasst mindestens eine Fotodiode für den Empfang und ein optisches Element für die Einkopplung reflektierter und/oder gestreuter Strahlung der Laserdiode in die Empfangseinrichtung. Die optische Einrichtung weist ferner Ablenkmittel auf, die die an optischen Elementen auftretende Streustrahlung auf die mindestens eine Fotodiode in der Empfangseinrichtung umlenkt.

Die US 2006/0221228 beschreibt die Verwendung von Ablenkspiegeln in sowohl Sende- als auch Empfangseinrichtung.

Die DE 199 08 214 beschreibt eine Vorrichtung zum berührungslosen Erkennen eines Objekts. Dabei ist ein optischer Sender und eine strahlungsdurchlässige Abdeckung für den optischen Sender vorgesehen. Eine Einrichtung zum Erkennen einer Verschmutzung der Abdeckung ist ebenfalls vorgesehen, wobei die Einrichtung ein Signal erzeugt, wenn eine Verschmutzung der Abdeckung erkannt wird.

### Offenbarung der Erfindung

Der Erfindung liegt die Aufgabe zugrunde, eine verbesserte optische Einrichtung zu schaffen, die das Erkennen einer Verschmutzung ermöglicht.

Diese Aufgabe wird durch die in Anspruch 1 beschriebene optische Einrichtung gelöst. Die Erfindung macht sich die Erkenntnis zunutze, dass an praktisch jeder Oberfläche einer optischen Komponente, wie insbesondere einer Linse, eines Spiegels oder dergleichen, ein bestimmter Teil des hindurchtretenden Lichts gestreut oder reflektiert wird, da keine 100 prozentige Transmission stattfindet. Der tatsächlich auftretende Grad der Reflexion /der Streuung ist nun aber außerordentlich empfindlich in Bezug auf den Verschmutzungsgrad der betrachteten Oberfläche der optischen Komponente. Besonders vorteilhaft wird die an optischen Elementen für die Auskopplung optischer Strahlung aus einer Sendeeinrichtung bzw. Einkopplung optischer Strahlung in eine Empfangseinrichtung entstehende Streustrahlung auf mindestens eine in der Empfangseinrichtung angeordnete Photodiode abgelenkt und von dieser detektiert. Die Erfassung und Ablenkung der Streustrahlung erfolgt vorteilhaft mittels zweier Spiegel, wobei ein erster Spiegel in der Sendeeinrichtung und der zweite Spiegel in der Empfangseinrichtung angeordnet sind. Die beiden Spiegel sind dabei derart aufeinander ausgerichtet, dass die von dem ersten Spiegel erfasste Streustrahlung auf den zweiten Spiegel gerichtet wird, der diese dann auf die Photodiode leitet. Um eine gute Fokussierung zu erreichen, wird vorteilhaft in dem Strahlengang zwischen dem ersten und dem zweiten Spiegel ein fokussierendes optisches Element angeordnet. Um eine Dämpfung zu intensiver Streustrahlung zu erreichen, kann vorteilhaft in dem Strahlengang zwischen den beiden genannten Spiegeln auch ein optisches Element mit Filtereigenschaft angeordnet sein. Besonders vorteilhaft kann dabei auch das fokussierende optische Element selbst zusätzlich als Filter ausgebildet sein. Um bei einer Einrichtung mit einem biaxialen Strahlengang das Signal-Rausch-Verhältnis zu verbessern kann, erfindungsgemäß, sowohl in der Sende- als auch in der Empfangseinrichtung ein Ablenkspiegel für die Strahlablenkung vorgesehen sein, der jeweils von einer Steuereinrichtung gesteuert wird. Um die Stellung der Ablenkspiegel optimal aufeinander abzustimmen, ist vorteilhaft eine Synchronisationseinrichtung vorgesehen.

Ein erfindungsgemäßes Verfahren für die Überprüfung einer optischen Einrichtung geht aus Anspruch 14 hervor.

Weitere Vorteile der Erfindung ergeben sich aus den Unteransprüchen, der Beschreibung und der Zeichnung.

Ausführungsbeispiele der Erfindung werden im Folgenden unter Bezug auf die Zeichnung näher erläutert. Dabei zeigt
- Figur 1: den prinzipiellen Aufbau einer optischen Einrichtung, insbesondere ei- nes Laser-Imagers, mit einer biaxialen Anordnung der optischen Kom- ponenten;
- Figur 2: im Vergleich dazu den Aufbau einer optischen Einrichtung mit einer uni- axialen Anordnung der optischen Komponenten;
- Figur 3: eine optische Einrichtung zur Erläuterung einer ersten Ausführungsvari- ante der Erfindung;
- Figur 4: eine optische Einrichtung zur Erläuterung einer zweiten Variante der Er- findung;
- Figur 5: eine optische Einrichtung zur Erläuterung einer dritten Variante der Er- findung;
- Figur 6: eine optische Einrichtung zur Erläuterung einer vierten Variante der Er- findung;
- Figur 7: ein erstes Ausführungsbeispiel einer optischen Einrichtung mit einem verbesserten Signal-Rausch-Verhältnis;
- Figur 8: ein zweites Ausführungsbeispiel einer optischen Einrichtung mit einem verbesserten Signal-Rausch-Verhältnis.

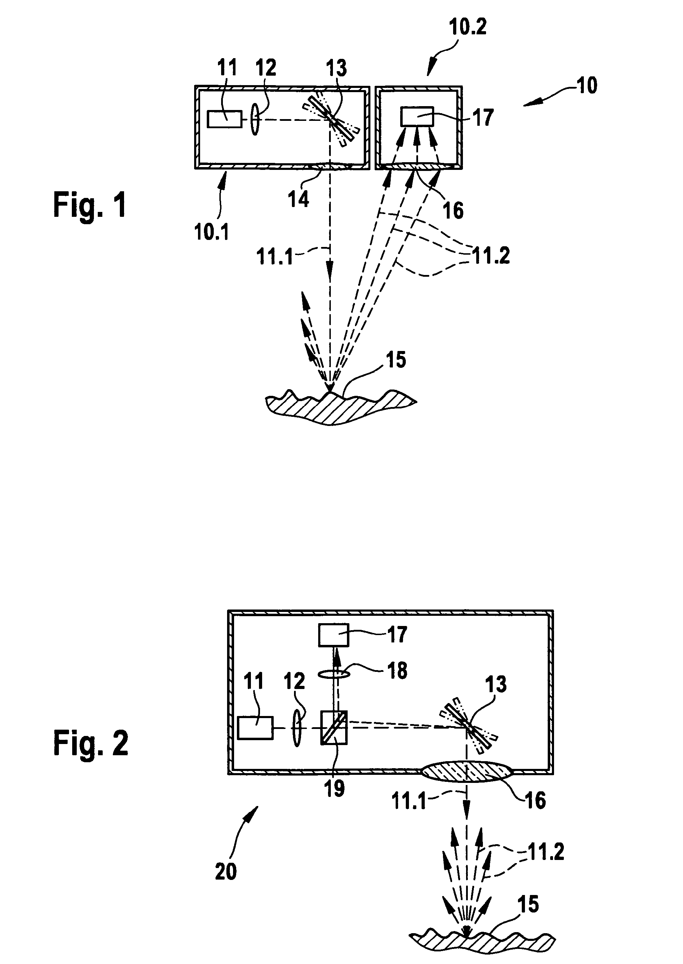

Figur 1 zeigt den prinzipiellen Aufbau einer optischen Einrichtung 10, insbesondere eines Laser-Imagers, mit einer biaxialen Anordnung der optischen Komponenten. Die Darstellung beschränkt sich auf die Wiedergabe wesentlicher optischer Komponenten. Elektronische Komponenten für die Steuerung, und die Aufbereitung bzw. Auswertung von Sende- und Empfangssignalen, sind nicht dargestellt. Die optische Einrichtung 10 umfasst eine Sendeeinrichtung 10.1 und eine Empfangseinrichtung 10.2. In der Sendeeinrichtung 10.1 sind, in Strahlausbreitungsrichtung aufeinander folgend, eine im Pulsbetrieb arbeitende Laserlichtquelle, vorzugsweise eine Laserdiode 11, ein erstes fokussierendes optisches Element, vorzugsweise eine Sammellinse 12, ein Ablenkspiegel 13 und ein zweites fokussierendes optisches Element, wiederum vorzugsweise eine Sendeoptik 14, angeordnet. Bei dem Ablenkspiegel 13 handelt es sich vorzugsweise um einen so genannten MEMS-Spiegel (MEMS = Micro-Electro-Mechanical System), der durch eine entsprechende, hier aber nicht dargestellte Steuereinrichtung, vorzugsweise in zwei Dimensionen auslenkbar ist und daher einen auf ihn treffenden Lichtstrahl auf eine Ebene ablenken kann. Die optischen Elemente 12 und 14 fokussieren den von der Laserdiode 11 erzeugten Lichtstrahl auf den Ablenkspiegel 13 bzw. auf ein Objekt 15 in dem Blickfeld des Laser-Imagers. Die Empfangseinrichtung 10.2 umfasst ein fokussierendes Element, vorzugsweise eine Empfangsoptik 16, sowie einen in Strahlausbreitungsrichtung folgenden Lichtempfänger, vorzugsweise eine Photodiode 17.

Im Folgenden wird die Funktionsweise der in Figur 1 dargestellten optischen Einrichtung 10 kurz beschrieben. Der von der Laserdiode 11 erzeugte, gepulste Laserstrahl wird von der Sammellinse 12 auf den Ablenkspiegel 13 fokussiert, der den Laserstrahl ablenkt. Die Ablenkung des Laserstrahls erfolgt dabei vorzugsweise in dem so genannten Flying-Spot-Verfahren, um das Umfeld des Fahrzeugs abzutasten. Der Ablenkspiegel 13 kann dazu vorzugsweise in zwei Dimensionen ausgelenkt werden. Der von dem Ablenkspiegel 13 abgelenkte Laserstrahl 11.1 wird durch eine Sendeoptik 14 aus der Sendeeinrichtung 10.1 ausgekoppelt und auf Objekte im Umfeld des Fahrzeugs fokussiert. An einem Objekt 15 in dem Umfeld des Fahrzeugs reflektierte Strahlung 11.2 gelangt zur Empfangseinrichtung 10.2. Die reflektierte Strahlung 11.2 trifft auf die Empfangsoptik 16, wird von dieser in die Empfangseinrichtung eingekoppelt und auf die Photodiode 17 fokussiert. Aus den Ausgangssignalen der Photodiode 17 wird ein Abbild der Fahrzeugumgebung gewonnen.

Im Vergleich dazu zeigt Figur 2 eine optische Einrichtung 20 mit einer uniaxialen Anordnung optischer Komponenten. Uniaxial bedeutet, in diesem Zusammenhang, dass wesentliche Teile des Lichtwegs für Sende- und Empfangsbetrieb identisch sind. Die Einrichtung 20 umfasst wiederum eine im Pulsbetrieb gesteuerte Laserdiode 11 für die Erzeugung eines Laserstrahls, der über eine fokussierende Sammellinse 12 und einen Strahlteiler 19 auf einen Ablenkspiegel 13 trifft und von diesem abgelenkt wird. Der von dem Ablenkspiegel 13 abgelenkte und von der Sende-/Empfangsoptik 16 fokussierte Laserstrahl 11.1 trifft auf ein Objekt 15 in dem Umfeld des Fahrzeugs. Die an dem Objekt 15 reflektierte bzw. gestreute Laserstrahlung 11.2 gelangt über die Sende-/Empfangsoptik 16, den Ablenkspiegel 13, den Strahlteiler 19 und die Sammellinse 18 auf die Photodiode 17. Der gemeinsame Strahlengang betrifft also die Strahlausbreitung zwischen dem Strahlteiler 19 und dem Objekt 15. Der Strahlteiler 19 trennt den Sende- und Empfangsweg. Die Funktionsweise der optischen Einrichtung 20 erschließt sich aus der obigen Funktionsbeschreibung der optischen Einrichtung 10.

Im Folgenden werden mehrere Varianten der erfindungsgemäßen Lösung beschrieben. Die optischen Eigenschaften der Einrichtung 10 werden durch Verschmutzungen, die sich auf den Oberflächen der optischen Elemente ablagern, massiv beeinträchtigt. Die Beeinträchtigung kann so stark sein, dass der Laser-Imager praktisch vollständig ausfällt und seine Ausgangssignale für das Fahrerassistenzsystem praktisch nicht mehr zur Verfügung stehen. Es ist daher besonders wichtig, die teilweise schleichend zunehmende Verschmutzung möglichst schnell und zuverlässig zu detektieren, um Gegenmaßnahmen einzuleiten. Beispielsweise kann ein Warnhinweis ausgegeben werden, der den Fahrer auf eine starke Verschmutzung und einen drohenden Ausfall des Laser-Imagers infolge der Verschmutzung hinweist und ihn zur Säuberung der optischen Elemente auffordert. Besonders anfällig für Verschmutzung sind die der Umwelt ausgesetzten Lichteintritts- bzw. Lichtaustrittsflächen der Optiken 14, 16 von Sende- und Empfangseinrichtung 10.1, 10.2.

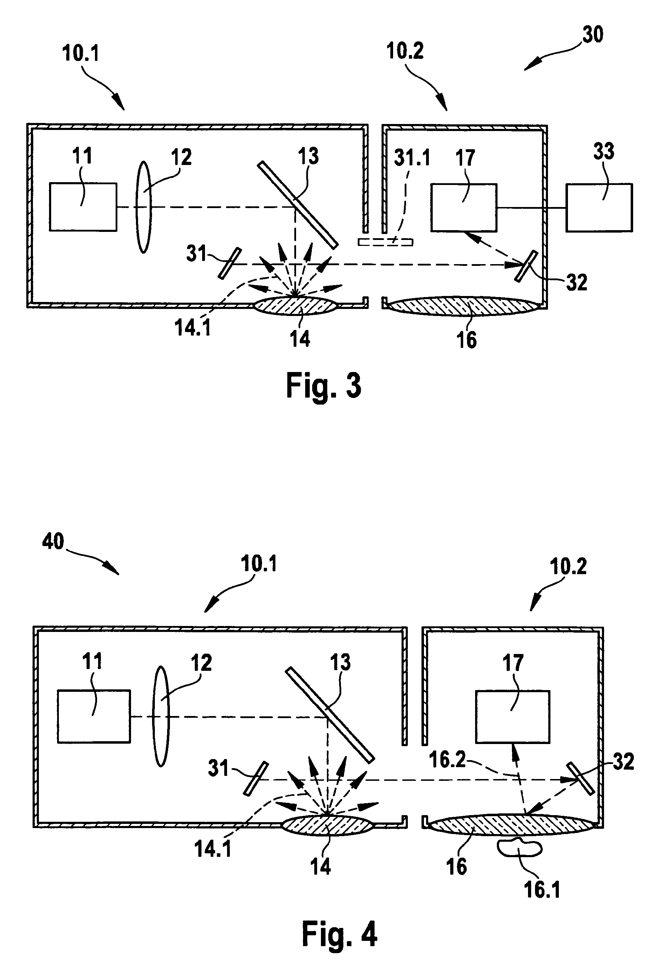

Kern der Erfindung ist die Nutzung des Streulichts und/oder der an den Linsenoberflächen reflektierten Laserpulse zur Erkennung, ob die Laseraustrittslinse, oder ggf. ein Lichtaustrittsfenster und die Empfangsoptik verschmutzt sind. Dabei wird die Erkenntnis ausgenutzt, dass keine in der Praxis eingesetzte optische Komponente einen Transmissionsgrad von 100% aufweist. Das bedeutet, dass stets ein bestimmter Bruchteil der Laserstrahlung an den Oberflächen der optischen Komponenten gestreut oder reflektiert wird. Der Grad dieser Streuung bzw. Reflexion hängt nun aber stark von dem Ausmaß der Verschmutzung dieser Oberflächen ab. Ist eine der beiden für den Lichtaustritt bzw. Lichteintritt vorgesehenen Optiken 14, 16 (Figur 1) verschmutzt, so wird der rückwärtige Reflex an Intensität zunehmen. Dies kann von der Photodiode 17 erkannt und damit für die Detektion einer Verschmutzung ausgenutzt werden. Zusätzlich kann, die im Vergleich zu der Laufzeit eines an einem Objekt 15 in dem Umfeld des Fahrzeugs reflektierten Lichtimpulses kurze Laufzeit der an der Verschmutzung reflektierten bzw. gestreuten Strahlung, bei der Erkennung der Verschmutzung herangezogen werden. Weiterhin kann vorteilhaft nicht nur die gemittelte oder integrierte Intensität der Streustrahlung für die Erkennung einer Verschmutzung herangezogen werden. Es kann zusätzlich oder alternativ auch die Polarisation der an der Verschmutzung gestreuten Strahlung ausgewertet werden, wobei die Polarisation der Strahlung vor der Detektion mit die Polarisation beeinflussenden optischen Komponenten beeinflusst werden kann. Im Folgenden werden, unter Bezug auf Figur 3, Figur 4, Figur 5 und Figur 6 mehrere Ausführungsformen der Erfindung erläutert. Alle in den genannten Figuren dargestellten optischen Einrichtungen 30, 40, 50, 60 zeigen Sende- und Empfangseinrichtungen 10.1, 10.2 eines Laser-Imagers mit biaxialer Anordnung von optischen Komponenten. Gleiche Bezugsziffern bezeichnen die schon in Bezug auf Figur 1 beschriebenen Komponenten.

Bei der in Figur 3 dargestellten optischen Einrichtung 30 kann eine Verschmutzung der für den Lichtaustritt verwendeten Sendeoptik 14 detektiert werden. Dazu sind, in einer ersten Ausführungsvariante, zwei Spiegel 31, 32 vorgesehen, wobei der erste Spiegel 31 in der Sendeeinrichtung 10.1 in der Nähe der Sendeoptik 14 und der zweite Spiegel 32 in der Empfangseinrichtung 10.2 angeordnet ist. An einer Verschmutzung der Sendeoptik 14 gestreute bzw. reflektierte Strahlung 14.1 trifft zunächst auf den ersten Spiegel 31, wird von diesem auf den zweiten Spiegel 32 gerichtet und von diesem zweiten Spiegel auf die Photodiode 17 abgelenkt. Die Photodiode 17 wertet die Streustrahlung aus und kann beispielsweise eine Warneinrichtung 33 steuern, die ein Warnsignal ausgibt, das den Fahrer auf eine Verschmutzung und einen dadurch ggf. verursachten Ausfall des Laser-Imagers hinweist. Bei einer einfacheren und daher ggf. preisgünstigeren Ausführungsvariante ist, anstelle der zwei Spiegel 31, 32 nur ein einziger Spiegel 31.1 vorgesehen, der von der Linse 14 ausgehende Streustrahlung erfasst, diese auf die Oberfläche der Linse 16 ablenkt, wo sie reflektiert wird und dadurch letztlich auf die Photodiode 17 trifft.

Bei der in Figur 4 dargestellten optischen Einrichtung 40 kann zunächst auch wieder eine Verschmutzung der für den Lichtaustritt verwendeten Sendeoptik 14 detektiert werden. Dazu sind zwei Spiegel 31, 32 vorgesehen, wobei der erste Spiegel 31 in der Sendeeinrichtung 10.1 in der Nähe der Sendeoptik 14 und der zweite Spiegel 32 in der Empfangseinrichtung 10.2 angeordnet ist. An einer Verschmutzung der Sendeoptik 14 gestreute bzw. reflektierte Strahlung 14.1 trifft zunächst auf den ersten Spiegel 31 und wird dann wiederum von diesem auf den zweiten Spiegel 32 gelenkt. Der zweite Spiegel 32 ist jedoch jetzt derart geneigt, dass die von dem Spiegel 31 auf ihn treffende Strahlung auf die innere Oberfläche der Empfangsoptik 16 abgelenkt wird. Von dort wird sie wieder reflektiert und trifft erst dann auf die Photodiode 17. Zusätzlich kann jetzt jedoch auch noch eine Verschmutzung der für den Lichteintritt in die Empfangseinrichtung 10.2 vorgesehenen Empfangsoptik 16 erkannt werden. Hier trifft nämlich auch die an einer Verschmutzung 16.1 der Empfangsoptik 16 gestreute Strahlung 16.2 auf die Photodiode 17 und kann so von dieser erfasst werden. Die Photodiode 17 wertet die Streustrahlung aus und kann beispielsweise, wie in dem Ausführungsbeispiel gemäß Figur 3 dargestellt, eine Warneinrichtung 33 steuern, die ein Warnsignal ausgibt, das den Fahrer auf eine Verschmutzung und einen dadurch ggf. verursachten Ausfall des Laser-Imagers hinweist.

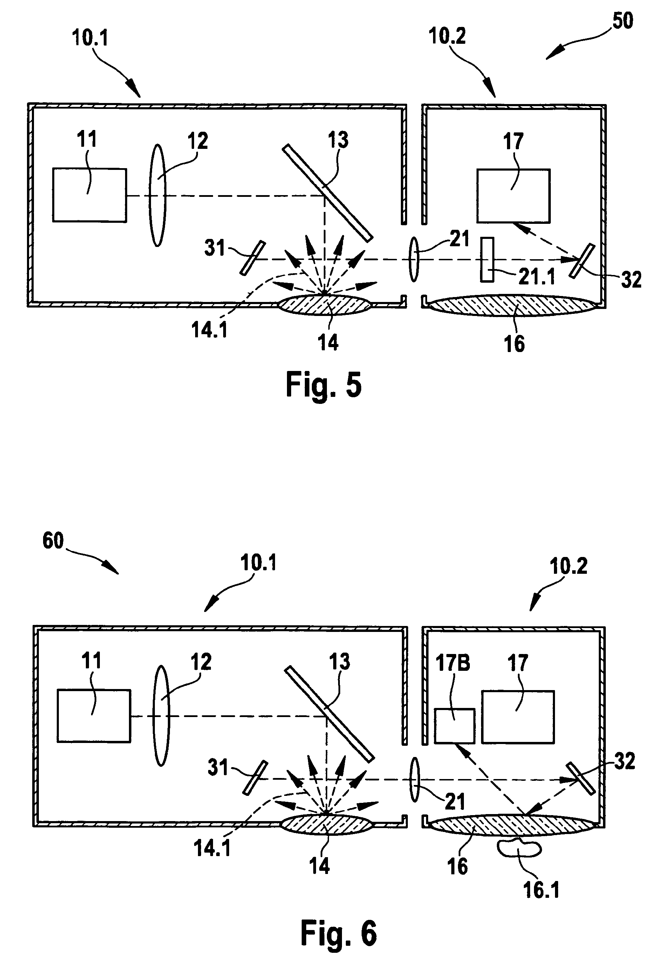

Bei der in Figur 5 dargestellten optischen Einrichtung 50 ist in dem Strahlengang zwischen dem ersten Spiegel 31 und dem zweiten Spiegel 32 zusätzlich ein optisches Element 21, insbesondere ein fokussierendes optisches Element, beispielsweise eine Sammellinse, angeordnet. Dadurch kann die von dem ersten Spiegel 31 reflektierte Streustrahlung 14.1 der Linse 14 noch besser auf den zweiten Spiegel 32 fokussiert werden, von dem sie dann auf die Photodiode 17 gelenkt wird.

Die in Figur 6 dargestellte optische Einrichtung 60 entspricht, im Wesentlichen, der schon in Figur 4 dargestellten Ausführungsform. Zusätzlich ist jedoch in der Empfangseinrichtung 10.2 eine weitere Photodiode 17B für die Erfassung des an den Linsen 14 und 16 auftretenden Streulichts vorgesehen. Da diese weitere Photodiode 17B lediglich zur Erfassung von Streulicht dient und keine Abbildung von Objekten 15 aus dem Umfeld des Fahrzeugs ermöglichen muss, kann, aus Kostengründen, eine sehr einfache und preiswerte Photodiode eingesetzt werden.

Das zusätzliche optische Element 21 in den Ausführungsbeispielen gemäß Figur 5 und Figur 6 ermöglicht, wie bereits erwähnt, eine bessere Fokussierung und damit eine bessere Einkopplung der Streustrahlung in die Photodiode 17 bzw. 17B. Für den Fall, dass die Intensität der Streustrahlung zu hoch ist, so dass das Risiko einer Übersteuerung der Photodioden 17, 17B besteht, kann, in einer vorteilhaften Ausführungsvariante der Erfindung, das optische Element zusätzlich auch als Filter ausgestaltet sein, um die Intensität der Streustrahlung zu verringern. In einer weiteren Ausführungsvariante kann jedoch auch ein weiteres optisches Element 21.1 in den Strahlengang eingefügt werden, das Filtereigenschaften aufweist, und insbesondere auch als Polarisationsfilter ausgebildet sein kann. In besonders vorteilhafter Weise kann die auftretende Streustrahlung auch für eine Triggerung der Photodiode 17 ausgenutzt werden. Dabei wird die Photodiode 17 nach Detektion der Streustrahlung 14.1 nur für ein physikalisch sinnvolles Zeitintervall photoempfindlich geschaltet, um an einem Objekt 15 in dem Umfeld des Fahrzeugs reflektierte bzw. gestreute Strahlung 11.2 empfangen zu können. Nach Ablauf des genannten Zeitintervalls ist die Photodiode zunächst wieder für Strahlung unempfindlich geschaltet. Auf diese Weise können unerwünschte Echos weitgehend unterdrückt und das Signal-Rausch-Verhältnis verbessert werden. Anstelle von Ablenkspiegeln 31, 31.1 und 32 können, in weiteren Ausführungsvarianten, auch andere Lichtführungsmittel, wie beispielsweise Lichtleiter oder Faserbündel, eingesetzt werden, um die Strahlung zu erfassen und in der gewünschten Weise abzulenken.

Die oben beschriebenen Einrichtungen mit einer biaxialen Anordnung der optischen Komponenten können allerdings den Nachteil haben, dass sie, im Vergleich zu einer uniaxialen Anordnung, ein schlechteres Signal-Rausch-Verhältnis aufweisen. Dies ist insbesondere bei zunehmendem Blickwinkel der Fall. Im Folgenden werden Ausführungsbeispiele der Erfindung beschrieben, bei denen dieser Nachteil vermieden wird.

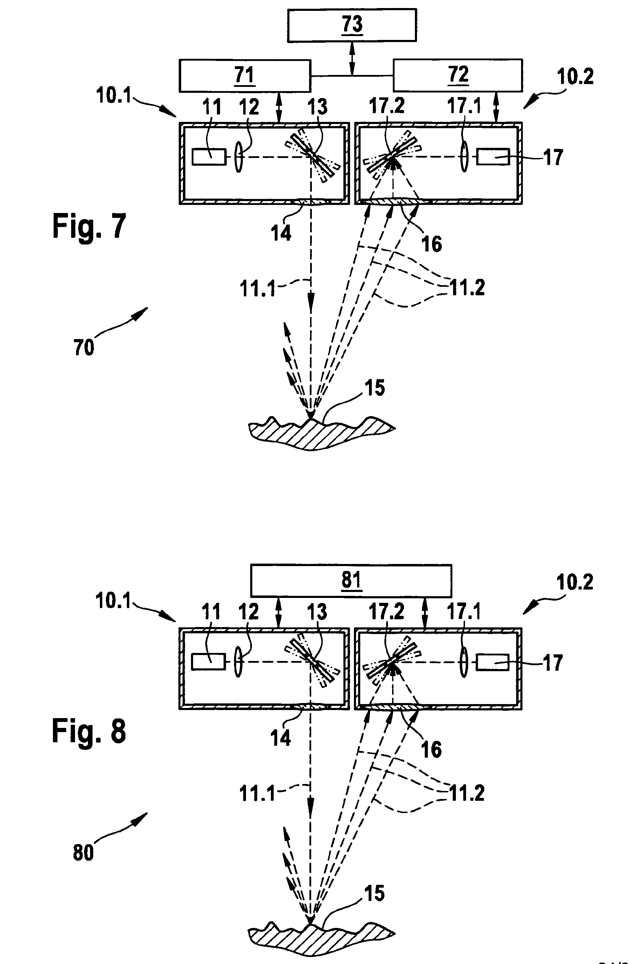

Figur 7 zeigt ein erstes Ausführungsbeispiel einer optischen Einrichtung mit verbesserten Signal-Rausch-Eigenschaften. Die in Figur 7 dargestellte Einrichtung 70 baut auf der in Figur 1 dargestellten Einrichtung mit einer biaxialen Anordnung der optischen Komponenten auf. Die Einrichtung 70 umfasst wiederum eine Sendeeinrichtung 10.1 und eine Empfangseinrichtung 10.2. In der Sendeeinrichtung 10.1 sind, in Strahlausbreitungsrichtung aufeinander folgend, eine im Pulsbetrieb arbeitende Laserlichtquelle, vorzugsweise eine Laserdiode 11, ein erstes fokussierendes optisches Element, vorzugsweise eine Sammellinse 12, ein Ablenkspiegel 13 und ein zweites fokussierendes optisches Element, wiederum vorzugsweise eine Sendeoptik 14, angeordnet. Bei dem Ablenkspiegel 13 handelt es sich vorzugsweise um einen so genannten MEMS-Spiegel (MEMS = Micro-Electro-Mechanical System), der durch eine Steuereinrichtung 71, vorzugsweise in zwei Dimensionen auslenkbar ist und daher einen auf ihn treffenden Lichtstrahl auf eine Ebene ablenken kann. Die optischen Elemente 12 und 14 fokussieren den von der Laserdiode 11 erzeugten Lichtstrahl auf den Ablenkspiegel 13 bzw. auf ein Objekt 15 in dem Blickfeld des Laser-Imagers. Die Empfangseinrichtung 10.2 umfasst ein fokussierendes Element, vorzugsweise eine Empfangsoptik 16, sowie einen in Strahlausbreitungsrichtung folgenden zweiten Ablenkspiegel 17.2, eine Sammellinse 17.1 und einen Lichtempfänger, vorzugsweise eine Photodiode 17. Auch der zweite Ablenkspiegel 17.2 ist vorzugsweise ein so genannter MEMS-Spiegel. Für die Steuerung des Ablenkspiegels 17.2 ist eine Steuereinrichtung 72 vorgesehen. Um eine möglichst optimale Synchronisation der Spiegelbewegungen der Ablenkspiegel 13 und 17.2 zu erreichen, ist zusätzlich eine mit den Steuereinrichtungen 71 und 72 verbundene Synchronisationseinrichtung 73 vorgesehen.

Im Folgenden wird die Funktionsweise der in Figur 7 dargestellten optischen Einrichtung 70 kurz beschrieben. Der von der Laserdiode 11 erzeugte, gepulste Laserstrahl wird von der Sammellinse 12 auf den Ablenkspiegel 13 fokussiert, der den Laserstrahl ablenkt. Die Ablenkung des Laserstrahls erfolgt dabei vorzugsweise in dem so genannten Flying-Spot-Verfahren, um das Umfeld des Fahrzeugs abzutasten. Der Ablenkspiegel 13 kann dazu vorzugsweise in zwei Dimensionen ausgelenkt werden. Der von dem Ablenkspiegel 13 abgelenkte Laserstrahl 11.1 wird durch eine Sendeoptik 14 aus der Sendeeinrichtung 10.1 ausgekoppelt und auf Objekte im Umfeld des Fahrzeugs fokussiert. An einem Objekt 15 in dem Umfeld des Fahrzeugs reflektierte Strahlung 11.2 gelangt zur Empfangseinrichtung 10.2. Die reflektierte Strahlung 11.2 trifft auf die Empfangsoptik 16, wird von dieser in die Empfangseinrichtung 10.2 eingekoppelt und über den Ablenkspiegel 17.2 und die Sammellinse 17.1 auf die Photodiode 17 fokussiert. Aus den Ausgangssignalen der Photodiode 17 wird ein Abbild der Fahrzeugumgebung gewonnen. Der Ablenkspiegel 17.2 wird dabei derart mit dem Ablenkspiegel 13 synchronisiert, dass das Signal an der Photodiode 17 maximal wird. Durch eine Reduzierung des Blickwinkels des Ablenkspiegels 17.2 kann dadurch vorteilhaft das Signal-Rausch-Verhältnis verbessert werden.

Figur 8 zeigt ein zweites Ausführungsbeispiel einer optischen Einrichtung 80 mit verbesserten Signal-Rausch-Eigenschaften. Im Unterschied zu dem in Figur 7 dargestellten Ausführungsbeispiel sind die Steuereinrichtungen 71, 72, 73 aus Figur 7 jetzt zu einer integrierten Steuereinrichtung 81 zusammengefasst. Die Steuereinrichtung 81 ermöglicht demzufolge eine Steuerung der Ablenkspiegel 13 und 17.2, sowie eine Synchronisation der Spiegelbewegungen.

## Patentansprüche

1. Optische Einrichtung (10, 20, 30, 40, 50, 60) mit einer Sendeeinrichtung (10.1) und einer Empfangseinrichtung (10.2) mit einer biaxialen Anordnung von optischen Elementen in der Sende- und Empfangseinrichtung (10.1, 10.2), bei der die Sendeeinrichtung (10.1) eine Laserdiode (11) als Strahlungsquelle und ein optisches Element als Sendeoptik (14) für die Auskopplung der von der Laserdiode (11) erzeugten Strahlung aus der Sendeeinrichtung (10.1) umfasst, bei der die Empfangseinrichtung (10.2) mindestens eine Photodiode (17) für den Empfang und ein optisches Element als Empfangsoptik (16) für die Einkopplung reflektierter und/oder gestreuter Strahlung der Laserdiode (11) in die Empfangseinrichtung umfasst, **dadurch gekennzeichnet, dass** die optische Einrichtung Ablenkmittel umfasst, die die an den optischen Elementen (14, 16) auftretende Streustrahlung (14.1, 16.2) auf die mindestens eine Photodiode (17) in der Empfangseinrichtung (10.2) umlenkt, wobei die Ablenkmittel für die Umlenkung der Streustrahlung mindestens zwei Spiegel (31, 32) umfassen, wobei der erste Spiegel (31) in der Sendeeinrichtung (10.1) angeordnet ist und die von der Sendeoptik (14) ausgehende Streustrahlung (14.1) auf den zweiten Spiegel (32) umlenkt, wobei der zweite Spiegel (32) in der Empfangseinrichtung (10.2) angeordnet ist und die ihm von dem ersten Spiegel (31) zugeleitete Streustrahlung auf die Photodiode (17) ablenkt.

2. Optische Einrichtung nach einem der vorhergehenden Ansprüche, **dadurch gekennzeichnet, dass** der zweite Spiegel (32) derart angeordnet ist, dass er die ihm von dem ersten Spiegel (31) zugeleitete Streustrahlung auf eine Außenoberfläche der Empfangsoptik (16) ablenkt, derart, dass die Streustrahlung erst nach Reflexion an der Empfangsoptik (16) auf die Photodiode (17) gelangt.

3. Optische Einrichtung nach einem der vorhergehenden Ansprüche, **dadurch gekennzeichnet, dass** in dem Strahlengang zwischen dem ersten Spiegel (31) und dem zweiten Spiegel (32) mindestens ein fokussierendes optisches Element, insbesondere eine Sammellinse (21) angeordnet ist.

4. Optische Einrichtung nach einem der vorhergehenden Ansprüche, **dadurch gekennzeichnet, dass** in der Empfangseinrichtung (10.2) eine zweite Photodiode (17B) angeordnet ist, die ausschließlich für den Empfang von Streustrahlung bestimmt ist.

5. Optische Einrichtung nach einem der vorhergehenden Ansprüche, **dadurch gekennzeichnet, dass** eine Warneinrichtung (33) vorgesehen ist, die bei Erfassung von Streustrahlung aktivierbar ist.

6. Optische Einrichtung nach einem der vorhergehenden Ansprüche, **dadurch gekennzeichnet, dass** in dem Strahlengang zwischen dem ersten Spiegel (31) und dem zweiten Spiegel (32) ein optisches Element (21.1) mit Filtereigenschaften angeordnet ist.

7. Optische Einrichtung nach Anspruch 6, **dadurch gekennzeichnet, dass** das optische Element (21.1) mit Filtereigenschaften ein Polarisationsfilter ist.

8. Optische Einrichtung nach einem der vorhergehenden Ansprüche, **gekennzeichnet durch** ihre Verwendung in einem Laser-Imager.

9. Optische Einrichtung nach einem der vorhergehenden Ansprüche, **gekennzeichnet durch** ihre Verwendung in einem Fahrerassistenzsystem eines Fahrzeugs.

10. Optische Einrichtung nach einem der vorhergehenden Ansprüche, **dadurch gekennzeichnet, dass** in der Sendeeinrichtung (10.1) und in der Empfangseinrichtung (10.2) mindestens je ein Ablenkspiegel (13, 17.2) vorgesehen ist.

11. Optische Einrichtung nach Anspruch 10, **dadurch gekennzeichnet, dass** Steuereinrichtungen (71, 72) für die Steuerung der Ablenkspiegel (13, 17.2) vorgesehen sind.

12. Optische Einrichtung nach Anspruch 11, **dadurch gekennzeichnet, dass** eine mit den Steuereinrichtungen (71, 72) verbundene Steuereinrichtung (73) vorgesehen ist, die eine Synchronisation der Bewegungen der Ablenkspiegel (13, 17.2) ermöglicht.

13. Optische Einrichtung nach Anspruch 12, **dadurch gekennzeichnet, dass** die Steuereinrichtungen für die Ablenkspiegel (13, 17.2) und die Steuereinrichtung für die Synchronisation zu einer Steuereinrichtung (81) integriert sind.

14. Verfahren für die Überprüfung einer optischen Einrichtung (10, 20, 30, 40, 50, 60), die eine Sendeeinrichtung (10.1) und eine Empfangseinrichtung (10.2) mit mindestens einer Photodiode (17) umfasst, wobei optische Elemente in der Sendeeinrichtung (10.1) und in der Empfangseinrichtung (10.2) in einer biaxialen Anordnung angeordnet sind und wobei die Sendeeinrichtung (10.1) ein optisches Element als Sendeoptik (14) für die Auskopplung von optischer Strahlung und die Empfangseinrichtung (10.2) ein optisches Element für die Einkopplung von optischer Strahlung umfasst, **dadurch gekennzeichnet, dass** die an den optischen Elementen für die Auskopplung bzw. Einkopplung optischer Strahlung entstehende Streustrahlung erfasst und auf die in der Empfangseinrichtung (10.2) angeordnete Photodiode (17) abgelenkt wird, wobei mittels eines erstes Spiegels (31) in der Sendeeinrichtung (10.1) die von der Sendeoptik (14) ausgehende Streustrahlung (14.1) auf einen zweiten Spiegel (32) umgelenkt wird, wobei der zweite Spiegel (32) in der Empfangseinrichtung (10.2) die ihm von dem ersten Spiegel (31) zugeleitete Streustrahlung auf die Photodiode (17) ablenkt.

15. Verfahren nach Anspruch 14, **dadurch gekennzeichnet, dass** bei Detektion von Streustrahlung eine Warneinrichtung (33) aktiviert wird.

16. Verfahren nach Anspruch 14 oder 15, **dadurch gekennzeichnet, dass** bei der Detektion von Streustrahlung deren Polarisation berücksichtigt wird.

## Claims

1. Optical device (10, 20, 30, 40, 50, 60), having a transmitting device (10.1) and a receiving device (10.2) with a biaxial arrangement of optical elements in the transmitting and receiving devices (10.1, 10.2), in which the transmitting device (10.1) comprises a laser diode (11), as radiation source, and an optical element, as transmitting optics (14), for coupling the radiation, produced by the laser diode (11), out from the transmitting device (10.1), and in which the receiving device (10.2) comprises at least one photodiode (17) for receiving and an optical element, as receiving optics (16), for coupling reflected and/or scattered radiation of the laser diode (11) into the receiving device, **characterized in that** the optical device comprises deflecting means which deflect the scattered radiation (14.1, 16.2) occurring at the optical elements (14, 16) onto the at least one photodiode (17) in the receiving device (10.2), the deflecting means comprising at least two mirrors (31, 32) for deflecting the scattered radiation, the first mirror (31) being arranged in the transmitting device (10.1) and deflecting the scattered radiation (14.1) emanating from the transmitting optics (14) onto the second mirror (32), the second mirror (32) being arranged in the receiving device (10.2) and deflecting onto the photodiode (17) the scattered radiation supplied to it by the first mirror (31).

2. Optical device according to one of the preceding claims, **characterized in that** the second mirror (32) is arranged in such a way that it deflects onto an outer surface of the receiving optics (16) the scattered radiation supplied to it by the first mirror (32), doing so in such a way that the scattered radiation reaches the photodiode (17) only after reflection at the receiving optics (16).

3. Optical device according to one of the preceding claims, **characterized in that** at least one focusing optical element, in particular a focusing lens (21), is arranged in the path between the first mirror (31) and the second mirror (32).

4. Optical device according to one of the preceding claims, **characterized in that** a second photodiode (17B), which is intended exclusively for the reception of scattered radiation, is arranged in the receiving device (10.2).

5. Optical device according to one of the preceding claims, **characterized in that** a warning device (33) which can be activated upon detection of scattered radiation is provided.

6. Optical device according to one of the preceding claims, **characterized in that** an optical element (21.1) having filter properties is arranged in the beam path between the first mirror (31) and the second mirror (32).

7. Optical device according to Claim 6, **characterized in that** the optical element (21.1) with filter properties is a polarization filter.

8. Optical device according to one of the preceding claims, **characterized by** its use in a laser imager.

9. Optical device according to one of the preceding claims, **characterized by** its use in a driver assistance system of a vehicle.

10. Optical device according to one of the preceding claims, **characterized in that** at least one deflecting mirror (13, 17.2) each is provided in the transmitting device (10.1) and in the receiving device (10.2).

11. Optical device according to Claim 10, **characterized in that** control devices (71, 72) are provided for controlling the deflecting mirrors (13, 17.2).

12. Optical device according to Claim 11, **characterized in that** a control device (73) which is and connected to the control devices (71, 72) and enables a synchronization of the movements of the deflecting mirrors (13, 17.2) is provided.

13. Optical device according to Claim 12, **characterized in that** the control devices for the deflecting mirrors (13, 17.2) and the control device for the synchronization are integrated to form a control device (81).

14. Method for testing an optical device (10, 20, 30, 40, 50, 60) which comprises a transmitting device (10.1) and a receiving device (10.2) with at least one photodiode (17), optical elements in the transmitting device (10.1) and in the receiving device (10.2) being arranged in a biaxial arrangement, and the transmitting device (10.1) comprising an optical element as transmitting optics (14) for the coupling out of optical radiation, and the receiving device (10.2) comprising an optical element for the coupling in of optical radiation, **characterized in that** the scattered radiation produced at the optical elements for coupling out or coupling in of optical radiation is detected and deflected onto the photodiode (17) arranged in the receiving device (10.2), a first mirror (31) in the transmitting device (10.1) being used to deflect onto a second mirror (32) the scattered radiation (14.1) emanating from the transmitting optics (14), the second mirror (32) in the receiving device (10.2) deflecting onto the photodiode (17) the scattered radiation supplied to it by the first mirror (31).

15. Method according to Claim 14, **characterized in that** a warning device (33) is activated upon detection of scattered radiation.

16. Method according to Claim 14 or 15, **characterized in that** when scattered radiation is being detected its polarization is taken into account.

## Revendications

1. Dispositif optique (10, 20, 30, 40, 50, 60) doté d'un dispositif d'émission (10.1) et d'un dispositif de réception (10.2),
des éléments optiques étant agencés biaxialement dans le dispositif d'émission et le dispositif de réception (10.1, 10.2),
le dispositif d'émission (10.1) comportant une diode laser (11) qui sert de source de rayonnement et un élément optique qui sert d'optique d'émission (14) qui émet hors du dispositif d'émission (10.1) le rayonnement produit par la diode laser (11),
le dispositif de réception (10.2) comportant au moins une photodiode (17) qui assure la réception et un élément optique qui sert d'optique de réception (16) qui reçoit le rayonnement réfléchi et/ou le rayonnement diffus de la diode laser (11) dans le dispositif de réception,
**caractérisé en ce que**
le dispositif optique comporte des moyens de déviation qui dévient sur la ou les photodiodes (17) du dispositif de réception (10.2) le rayonnement diffus (14.1, 16.2) qui aboutit sur les éléments optiques (14, 16),
**en ce que** les moyens de déviation comportent au moins deux miroirs (31, 32) qui assurent la déviation du rayonnement diffus, le premier miroir (31) étant disposé dans le dispositif d'émission (10.1) et déviant sur le deuxième miroir (32) le rayonnement diffus (14.1) émis par l'optique d'émission (14) et
**en ce que** le deuxième miroir (32) est disposé dans le dispositif de réception (10.2) et dévie sur la photodiode (17) le rayonnement diffus qui lui est apporté par le premier miroir (31).

2. Dispositif optique selon l'une des revendications précédentes, **caractérisé en ce que** le deuxième miroir (32) est disposé de telle sorte qu'il dévie sur une surface extérieure de l'optique de réception (16) le rayonnement diffus qui lui est apporté par le premier miroir (31), de telle sorte que le rayonnement diffus n'aboutisse sur la photodiode (17) qu'après réflexion sur l'optique de réception (16).

3. Dispositif optique selon l'une des revendications précédentes, **caractérisé en ce qu'**au moins un élément optique concentrateur, en particulier une lentille concentratrice (21), est disposé dans le parcours du rayonnement entre le premier miroir (31) et le deuxième miroir (32).

4. Dispositif optique selon l'une des revendications précédentes, **caractérisé en ce qu'**une deuxième photodiode (17B) destinée exclusivement à recevoir le rayonnement diffus est disposée dans le dispositif de réception (10.2).

5. Dispositif optique selon l'une des revendications précédentes, **caractérisé en ce qu'**il présente un dispositif d'alarme (33) qui peut être activé lors de la détection d'un rayonnement diffus.

6. Dispositif optique selon l'une des revendications précédentes, **caractérisé en ce qu'**un élément optique (21.1) qui présente des propriétés de filtration est disposé dans le parcours du rayonnement entre le premier miroir (31) et le deuxième miroir (32).

7. Dispositif optique selon la revendication 6, **caractérisé en ce que** l'élément optique (21.1) doté de propriétés de filtrage est un filtre polarisant.

8. Dispositif optique selon l'une des revendications précédentes, **caractérisé en ce qu'**il est utilisé dans un dispositif de formation d'image par laser.

9. Dispositif optique selon l'une des revendications précédentes, **caractérisé en ce qu'**il est utilisé dans un système d'assistance au conducteur d'un véhicule.

10. Dispositif optique selon l'une des revendications précédentes, **caractérisé en ce qu'**au moins un miroir déviateur (13, 17.2) est prévu respectivement dans le dispositif d'émission (10.1) et dans le dispositif de réception (10.2).

11. Dispositif optique selon la revendication 10, **caractérisé en ce que** des dispositifs de commande (71, 72) sont prévus pour assurer la commande des miroirs déviateurs (13, 17.2).

12. Dispositif optique selon la revendication 11, **caractérisé en ce qu'**il présente un dispositif de commande (73) relié aux dispositifs de commande (71, 72) et qui permet de synchroniser le déplacement des miroirs déviateurs (13, 17.2).

13. Dispositif optique selon la revendication 12, **caractérisé en ce que** le dispositif de commande des miroirs déviateurs (13, 17.2) et le dispositif de commande de synchronisation sont intégrés en un dispositif de commande (81).

14. Procédé de vérification d'un dispositif optique (10, 20, 30, 40, 50, 60) qui comporte un dispositif d'émission (10.1) et un dispositif de réception (10.2) dotés d'au moins une photodiode (17),
des éléments optiques étant disposés biaxialement dans le dispositif d'émission (10.1) et dans le dispositif de réception (10.2),
le dispositif d'émission (10.1) présentant un élément optique servant d'optique d'émission (14) et émettant un rayonnement optique,
le dispositif de réception (10.2) présentant un élément optique qui permet la réception du rayonnement optique,
**caractérisé en ce que**
le rayonnement diffus qui aboutit sur les éléments optiques assurant l'émission et/ou la réception du rayonnement optique est détecté et est dévié sur la photodiode (17) disposée dans le dispositif de réception (10.2),
**en ce que** le rayonnement diffus (14.1) sortant de l'optique d'émission (14) est dévié sur un deuxième miroir (32) au moyen d'un premier miroir (31) prévu dans le dispositif d'émission (10.1) et
**en ce que** le deuxième miroir (32) prévu dans le dispositif de réception (10.2) dévie sur la photodiode (17) le rayonnement diffus qui lui est apporté par le premier miroir (31).

15. Procédé selon la revendication 14, **caractérisé en ce qu'**un dispositif d'alarme (33) est activé lors de la détection d'un rayonnement diffus.

16. Procédé selon les revendications 14 ou 15, **caractérisé en ce que** la polarisation du rayonnement diffus est prise en compte lors de sa détection.
